# EUROPEAN PATENT SPECIFICATION

(11) **EP 1 155 559 B1**
(45) Date of publication and mention of the grant of the patent: **15.08.2007**
(21) Application number: 00906321.5
(22) Date of filing: 11.02.2000
(51) Int. Cl.: H04M 7/00

(54) **METHODS AND SYSTEMS FOR CALL ROUTING AND CODEC NEGOTIATION IN HYBRID VOICE/DATA/INTERNET/WIRELESS SYSTEMS**
VERFAHREN UND VORRICHTUNG ZUM VERMITTLEN VON ANRUFEN IN HYBRIDEN SPRACHE/DATA/INTERNET/SCHNURLOS SYSTEMEN
PROCEDES ET SYSTEMES D'ACHEMINEMENT D'APPELS ET DE NEGOTIATION CODEC DANS DES SYSTEMES HYBRIDES VOIX/DONNEES/INTERNET/RADIO

(30) Priority: 24.02.1999 US 121496 P
(43) Date of publication of application: 21.11.2001
(73) Proprietor: TELEFONAKTIEBOLAGET LM ERICSSON (publ), 164 83 Stockholm (SE)
(72) Inventor: HELLWIG, Karl, D-97539 Wonfurt (DE); HUNDSCHEIDT, Frank, NL-6463 BK Kerkrade (NL); VERGOPOULOS, George, GR-15 341 Agia Paraskevi Athens (GR); BJELLAND, Frode, N-4825 Arendal (NO); WIDMARK, Jerker, S-174 59 Sundybergh (SE)
(74) Representative: Tonscheidt, Andreas
(86) International application number: PCT/EP2000/001130
(87) International publication number: WO 2000/051330

(56) References cited:
- WO-A-99/05590
- HANSSON A ET AL: "PHONE DOUBLER - A STEP TOWARDS INTEGRATED INTERNET AND TELEPHONE COMMUNITIES" ERICSSON REVIEW,SE,ERICSSON. STOCKHOLM, no. 4, 1 January 1997 (1997-01-01), pages 142-151, XP000725693 ISSN: 0014-0171
- THOM G A: "H. 323: THE MULTIMEDIA COMMUNICATIONS STANDARD FOR LOCAL AREA NETWORKS" IEEE COMMUNICATIONS MAGAZINE,US,IEEE SERVICE CENTER. PISCATAWAY, N.J, vol. 34, no. 12, 1 December 1996 (1996-12-01), pages 52-56, XP000636454 ISSN: 0163-6804

## Description

### BACKGROUND

The present invention generally relates to routing and coding in the field of communication systems and, more particularly, to routing and coding of signals which may be transmitted over various different types of communication systems, e.g., packet-switched, circuit-switched, wireline, wireless, Internet, etc., enroute between two parties.

The growth of commercial communication systems and, in particular, the explosive growth of cellular radiotelephone systems, have compelled system designers to search for ways to increase system capacity without reducing communication quality beyond consumer tolerance thresholds. One technique to achieve these objectives involved changing from systems wherein analog modulation was used to impress data onto a carrier wave, to systems wherein digital modulation was used to impress the data on carrier waves.

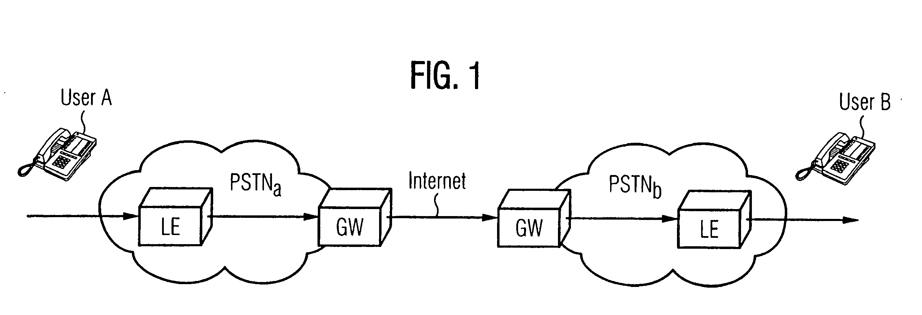

Another recent trend in telecommunications is the advent of the Internet. Of particular interest in this context is the capability to carry telephone calls over the Internet using packet-switching based on the Internet Protocol (IP). This type of service is sometimes referred to as "voice over IP"(VoIP). For example, as shown in Figure 1, a user A can communicate with a user B using Internet and VoIP techniques as communication interface between their respective public switched telephone networks (PSTNs).

Given the growing usage of this type of wireline-based service, it would be useful to also be able to use VoIP techniques in conjunction with wireless communication systems. However, such a combination raises several issues in terms of call routing, overhead signalling and coding. Consider the following examples.

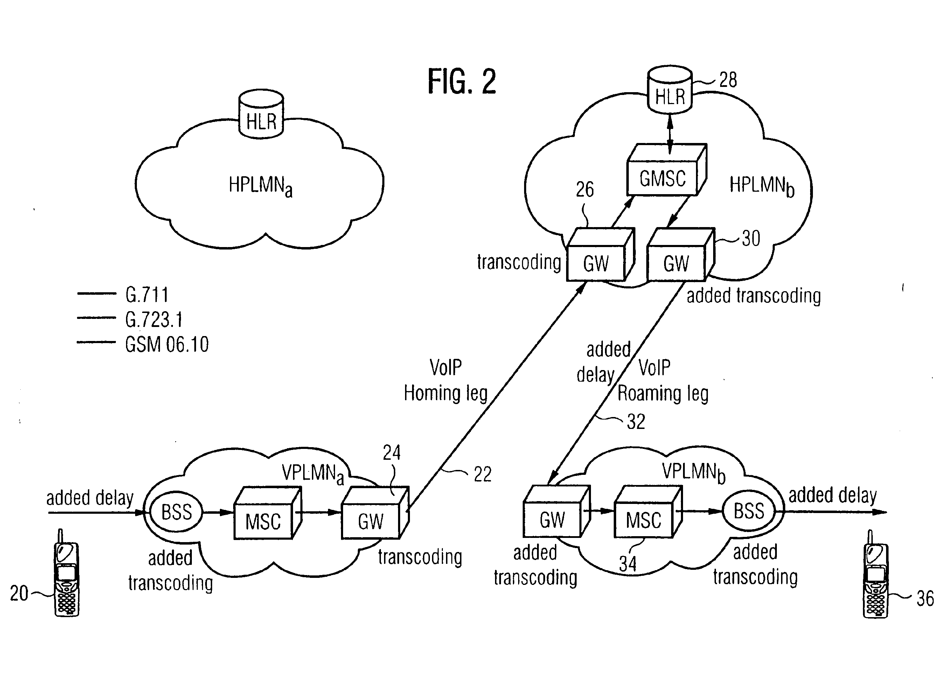

The equal access function (planned for implementation within the GSM networks) allows a subscriber to choose a default carrier from among several interexchange carriers (IXC) for national long distance and international communication "legs", i.e., transmissions between home and visiting public land mobile networks (PLMNs). A call to a mobile, e.g., GSM, user is typically first routed to the home network (which routing is referred to herein as the "homing leg") and then further to the visited network (which routing is referred to herein as the "roaming leg"). In a mobile-to-mobile call, equal access can be used from the calling subscriber on the homing leg (i.e., from VPLMN_{A} to HPLMN_{B} in Figure 2) and the called subscriber roaming leg (i.e., from HPLMN_{B} to VPLMN_{B} in Figure 2). This means that the calling subscriber can select the IXC for the homing leg (which carrier may also be an Internet telephony service provider (ITSP) as well) on a pre-selection and/or on a call-by - call basis by using a specific prefix in front of the dialed destination number. The IXC to be used for the roaming leg is indicated by the Primary Interexchange Carrier (PIC) identity , as stored in the user's profile in HLR.

Permitting the uncoordinated introduction of VoIP on the roaming leg can introduce unpredictable speech quality (e.g., associated with multiple transcodings)and long call delays. For example, in the case that the mobile terminating call is coming from the circuit switched domain, then the gateway mobile switching center (GMSC) will eventually route the call towards the nearest voice gateway in its domain if the primary inter-exchange carrier (PIC) identity indicates a VoIP IXG for the roaming leg. If, on the other hand, the incoming call comes from the IP domain (e.g., using an ITSP's VoIP network), then the call will unnecessarily undergo multiple conversions between the IP and circuit switched domain. The multiple transcodings between the different codecs used on the IP and circuit switched call legs will degrade the speech quality and add significant delays on the speech path. Th is problem will be more evident upon review of Figure 2 which illustrates a call between two mobile users which is routed over two VoIP legs.

Therein, an initial coding (e.g., compression of voice information, also referred to as source or speech coding) is applied to the information at the mobile station 20 prior to transmission over the air interface. The particular coding algorithm is defined by the applicable air interface standard, in this example that defined in the GSM 06.10 standard and referred to herein simply as the "GSM codec". Next, the received information is transcoded in the BSC/TRC from the GSM codec to a G-711 codec (e.g., an ordinary PCM codec as defined by G.711) for transmission within nodes of the VPLMNₐ. Since, in this example, a VoIP bypass 22 is used to route the call on the homing leg, another transcoding is performed in the VoIP gateway 24. For example, the information can be transcoded from G.711 to a low bit-rate code (e.g, that specified in G.723.1 or G.729) for transmission over an IP network 22. Once the information reaches the recipient user's HPLMN _{b}, it is again transcoded at gateway 26, i.e., from the low bit-rate code back into PCM code for routing within the HPLMN nodes. Routing information is obtained from the home location register (HLR) 28 in order to route the call to the MSC 34 which is currently supporting mobile communications with the recipient. Then, the information is again transcoded at gateway 30 and transmitted over the VoIP roaming leg network 32. At the VPLMN_{b}, the information is once again transcoded into PCM for routing therein. Finally, the information is again transcoded into the GSM codec mode and transmitted over the air interface to mobile unit 36.

It can be seen that, in this example wherein VoIP is used for both the homing and roaming leg, a total of six transcodings can take place. Each conversion between coding standards reduces speech quality, and each encoding to a low bitrate codec adds about 20-30 ms delay (i.e., which is primarily attributable to waiting for enough speech data to generate a codec frame). Further transcodings can occur if, for example, other services such as call forwarding or conference calling are invoked. This means that the received speech quality becomes unpredictable, since it becomes dependent on the particular traffic case and on the various codecs (e.g., different standards may be used in different segments such as GSM over the first air interface and DAMPS over the second) applied to segments in the call.

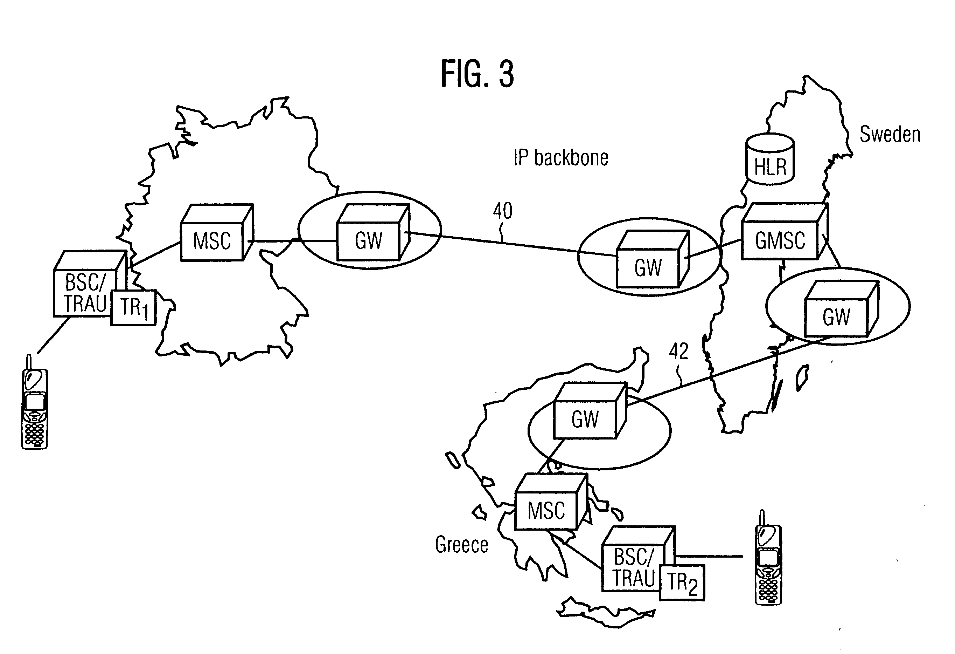

One way to avoid this difficulty is to use the PCM coding on the homing and roaming IP legs. This reduces the number of transcodings to two from the six transcodings in the previous example. More specifically, the only transcodings needed to implement this solution would be performed upon receiving information from the originator over the air interface (TR₁) and prior to transmitting information to the recipient over the air interface (TR₂). The IP links 40 and 42 would convey information using the same encoding as the PLNMs, as shown in Figure3. However, this solution provides none of the transmission capacity savings which are available if the low bit rate coding is employed over the IP legs. For example, using codec G723.1 over IP legs would provide a transmission capacity savings factor of 10 relative to PCM encoding. Moreover, to enable the common usage of G.711 coding over all legs in practice, all parties involved would have to agree to only use this type of coding.

The international patent application WO 99/05590 introduces an integrated voice system that enables to set up calls between network nodes via an IP network. However, the system is limited to fixed networks an therefore does not solve the problems related to mobile telecommunication networks as roaming to further networks and voice codings.

Accordingly, it would be desirable to provide enhanced techniques for routing and coding of calls which use various systems to route information between two parties.

### Summary

These and other drawbacks and limitations of conventional methods and systems for communicating information are overcome with the method according to claim 1 and the corresponding apparatus of claim 9.

According to exemplary embodiments of the present invention, evaluation regarding routing of calls is performed at a call control point (e.g. a gatekeeper) in the ITPSs and/or wireless network. According to an exemplary embodiment, the PIC identity associated with the recipient party's preferences is acquired from, for example, the recipient's HPLMN and sent to the gatekeeper. The PIC identity is used by the gatekeeper to identify the type of carrier network (e.g. circuit switched or VoIP) to be used to route information to the recipient and is used by the gatekeeper to make further routing decisions. For example, in the case that the PIC identity sent to the gatekeeper identifies the preferred carrier as circuit-switched carrier, then the IP homing leg is terminated at the voice gateway in the recipient's HPLMN and the information is sent over to the GMSC where normal, circuit-switched routing procedures (e.g., those defined in the GSM standard for routing calls to a roaming mobile user) will apply. If, instead a VoIP carrier is identified by the gatekeeper based on the PIC identity, then the gatekeeper retrieves from the HLR the called user's roaming number, which is used to further route the call directly over the IP domain towards a voice gateway at the visited network. In this latter case, the call need not be routed through the HPLMN of the called user and both delay and the number of transcodings can be minimized.

According to another exemplary embodiment of the present invention, additional transcoding steps (possibly all transcoding) can be avoided if the communication nodes can agree on a single encoding, that is if so-called "tandem free operation" (TFO) can be made to work end-to-end for IP-telephony. In the general case, this would imply voice gateways being able to extend TFO negotiation on the circuit switched call legs towards the IP call legs and vice versa.

By combining inband signalling (e.g., as set forth in GSM TS 04.53) through the telephony exchanges and outband signalling in the IP network (e.g., as set forth in H.245, SDP, RTCP), it is possible to achieve one encoding and one decoding of the speech, end-to-end, when a mobile subscriber is involved. Alternatively, this method can be used on parts of the call to minimize the number of transcodings. By negotiating a suitable format of encoded speech, the bandwidth used in the IP network can be minimised.

### BRIEF DESCRIPTION OF THE DRAWINGS

These and other objects, features and advantages of the present invention will become more apparent upon reading from the following detailed description, taken in conjunction with the accompanying drawings, wherein:
FIG. 1 is a diagram illustrating voice over the Internet in conjunction with a wireline-based system;
FIG. 2 is a diagram illustrating exemplary delays and transcodings associated with one implementation of VoIP between two wireless terminals;
FIG. 3 is a diagram illustrating exemplary delays and transcodings associated with another implementation ofVoIP between two wireless terminals wherein transcoding is not performed between PLMNs and IP networks;
FIG. 4 is a diagram illustrating an exemplary GSM radiocommunication system which can be used to make wireless accesses to a communication system in accordance with the present invention;
FIG. 5 is a diagram illustrating exemplary interconnections between a wireless communication system, a PSTN and a corporate local area network (LAN) through the Internet in accordance with the present invention;
FIG. 6 is a flow chart illustrating a method for routing calls in accordance with an exemplary embodiment of the present invention;
FIG. 7 is a is a diagram illustrating exemplary routing in accordance with the exemplary embodiment of FIG. 6; and
FIG. 8 is a diagram illustrating an further exemplary embodiment in accordance with the present invention.

### DETAILED DESCRIPTION

The following exemplary embodiments are provided in the context of communication systems, a portion of which are TDMA radiocommunication systems. However, those skilled in the art will appreciate that this access methodology is merely used for the purposes of illustration and that the portions of the communication systems which involve radio links according to the present invention can be implemented using any type of access methodologies including frequency division multiple access (FDMA), TDMA, code division multiple access (CDMA) and hybrids thereof.

Moreover, operation in accordance with GSM communication systems is described in European Telecommunication Standard Institute (ETSI) documents ETS 300 573, ETS 300 574 and ETS 300 578. Therefore, the operation of the GSM system is only described herein to the extent necessary for understanding an exemplary manner in which wireless access can be made to a communication system in accordance with the present invention. Although, the present invention is described in terms of exemplary embodiments involving a GSM system, those skilled in the art will appreciate that the wireless access made according to the present invention could be provided using a wide variety of other digital communication systems, such as those based on wideband CDMA, wireless ATM, DAMPS, PDC,etc.

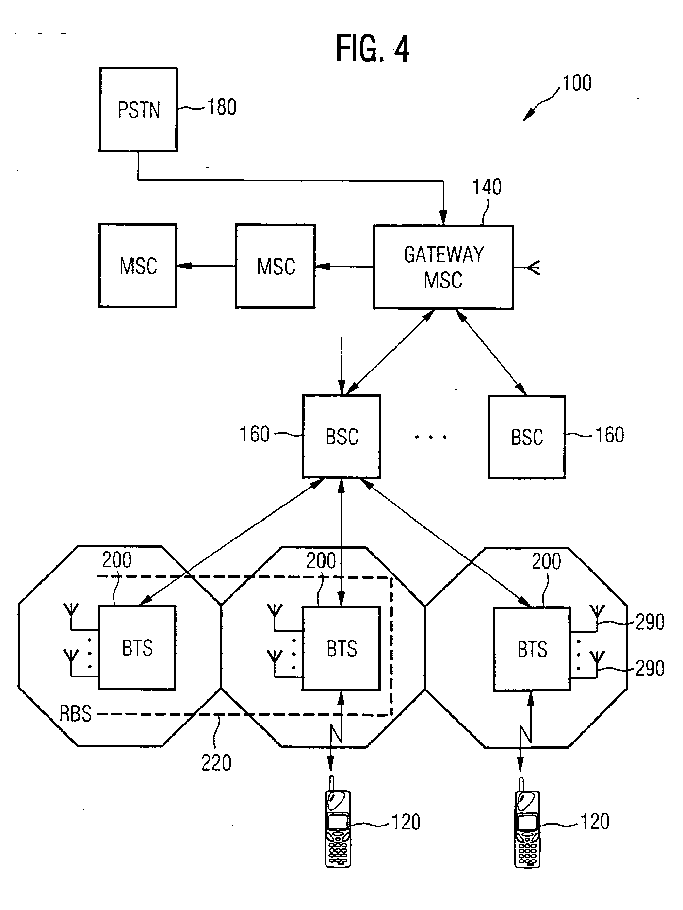

Referring to Figure 4, a communication system 100 according to an exemplary GS M embodiment of the present invention is depicted. The system 100 is designed as a hierarchical network with multiple levels for managing calls. Using a set of uplink and downlink frequencies, mobile stations 120 operating within the system 100 participate in calls using time slots allocated to them on these frequencies. At an upper hierarchical level , a group of Mobile Switching Centers (MSCs) 140 are responsible for the routing of calls from an originator to a destination. In particular, these entities are responsible for setup, control and termination of calls. One of the MSCs 140, known as the gateway MSC (GMSC), handles communication with a Public Switched Telephone Network (PSTN) 180, or other public and private networks.

At a lower hierarchical level, each of the MSCs 140 are connected to a group of base station controllers (BSCs) 160. Under the GSM standard, the BSC 160 communicates with a MSC 140 under a standard interface known as the A-interface, which is based on the Mobile Application Part of CCITT Signaling System No. 7.

At a still lower hierarchical level, each of the BSCs 160 controls a group of base transceiver stations (BTSs) 200. Each BTS 200 includes a number of TRXs (not shown) that use the uplink and downlink RF channels to serve a particular common geographical area, such as one or more communication cells 210. The BTSs 200 primarily provide the RF links s for the transmission and reception of data bursts to and from the mobile stations 120 within their designated cell. When used to convey packet data, these channels are frequently referred to as packet data channels (PDCHs). In an exemplary embodiment, a number of BTSs 200 are incorporated into a radio base station (RBS) 220. The RBS 22 may, for example, be configured according to a family of RBS-2000 products, which products are offered by Telefonaktiebolaget L M Ericsson, the assignee of the present invention. For more details regarding exemplary mobile station 120 and RBS 220 implementations, the interested reader is referred to U.S. Patent Application US-A-5909469 entitled "A Link Adaptation Method For Links using Modulation Schemes That Have Different Symbol Rates", to Magnus Frodigh et al.

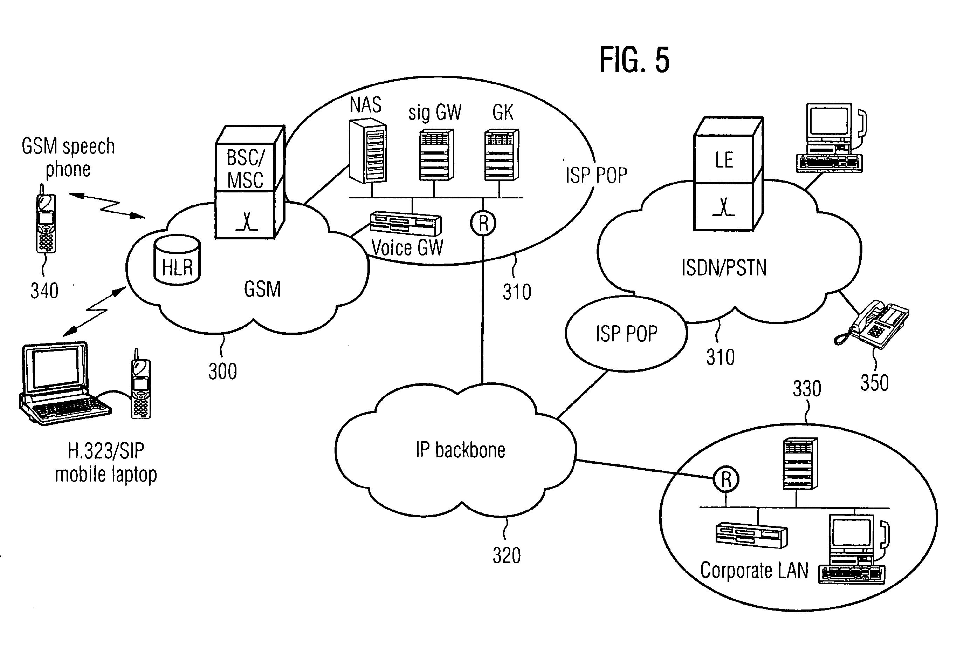

In addition to being directly connected to a PSTN 120, a GSM radiocommunication system 300 can also be connected to a PSTN 310 through the Internet as seen in Figure 5. Therein, the GSM system 300 is connected (via an NAS and voice gateway) through an internet service provider 310 to the IP backbone or Internet 320. In addition to PSTN 310, the Internet 320 is also connected to a corporate LAN 330 to provide a further example of the types of systems over which information may be conveyed between two (or more) terminal devices according to the present invention.

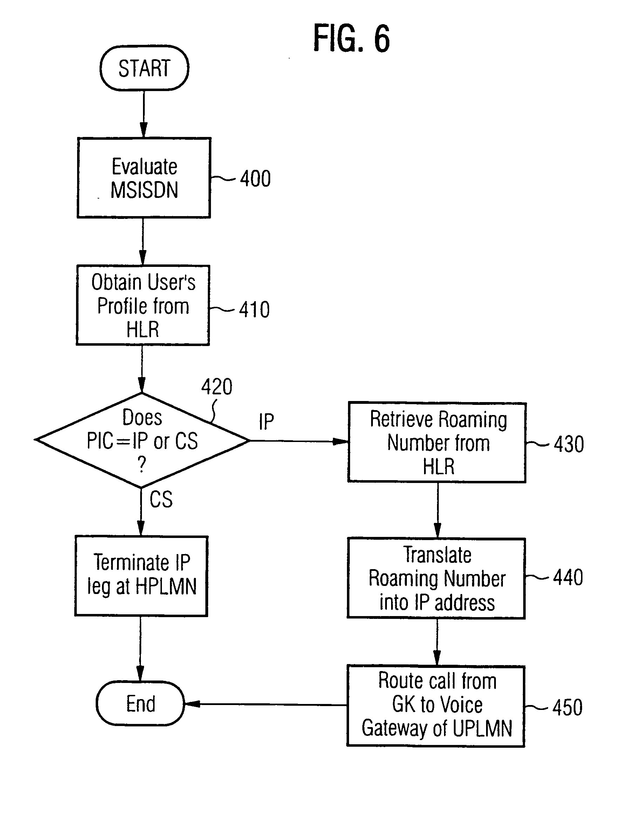

According to an exemplary embodiment of the present invention, routing of calls between, for example, a GSM cellular phone 340 and fixed (wireline) telephone 350 can be simplified by evaluating the calls at a gatekeeper, which can e.g., be either the GSM system 300 or the ISP 310 in the exemplary system of Figure 5. The gatekeeper obtains routing information and forwards the calls directly to a destination based on the type of carrier to be used and the routing information obtained from a user's profile. An exemplary method is illustrated in the flow chart of Figure 6. First, at step 400, the gatekeeper can perform a number analysis on the directory number (e.g., the MSISDN) included in the call setup message received from the mobile terminal placing the call in order to identify that it is a mobile user. Then, the gatekeeper can download the user's profile from its HLR using, for example, a MAP operation at step 410. Those skilled in the art will be familiar with CCITT signaling generally and MAP operations, specifically, so a further discussion of such operations is omitted here. At step 420, the gatekeeper determines whether the PIC identity included in the user's profile is associated with an IP carrier or a circuit-switched carrier. If the PIC identity indicates that an IP carrier is to be used for the roaming leg, then the flow proceeds to step 430, wherein the gatekeeper retrieves a roaming number for the intended recipient by using, for example, the SendRoutinglnfo MAP operation towards the HLR. Then, at step 440, the gatekeeper can translate the received roaming number into an IP address of the voice gateway at the VPLMN of the called user. The payload information can then be sent directly to that address from the gatekeeper as indicated at step 450. If, on the other hand, the PIC identity is something other than an IP carrier, e.g, a circuit switched carrier, then the gatekeeper wil terminate the IP leg of the call at the voice gateway in the HPLMN at step 460.

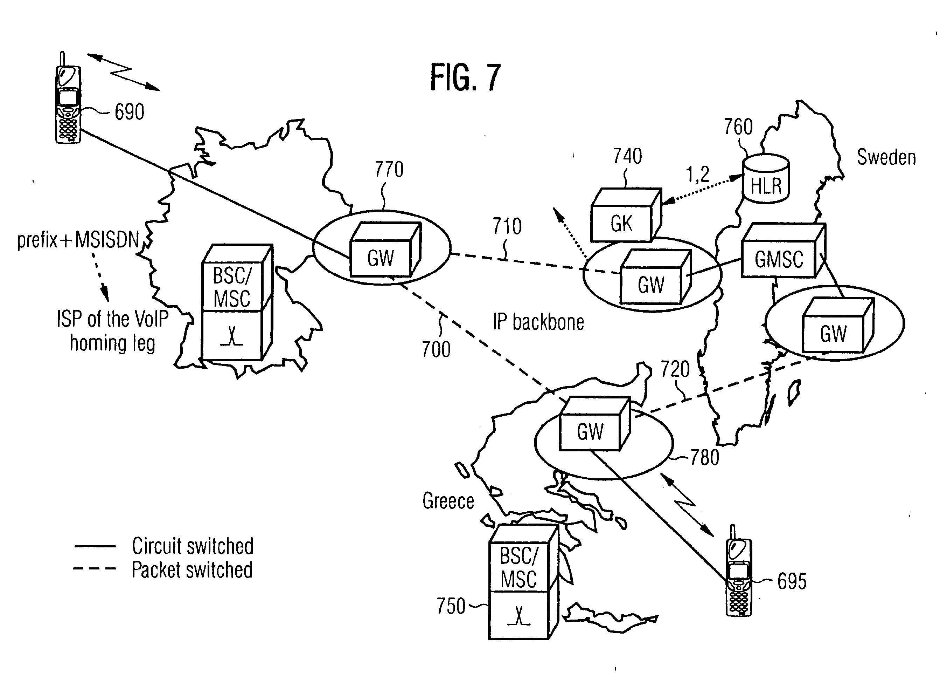

This technique is conceptually depicted in Figure 7. Therein, according to the present invention, the payload information to be communicated between terminal 690 and terminal 695 can be transmitted directly across IP link 700 rather than being routed through the called user's home system using links 710 and 720, thereby reducing the number of transcodings by at least two. The gatekeeper 740 determines that the roaming leg (720) is a VoIP leg from, e.g., a prefix transmitted by terminal 690 with the MSISDN. Then, the roaming number associated with the BSC/MSC 750 currently serving recipient terminal 695 is acquired for HLR 760. The gatekeeper 740 then instructs gateway 770 to forward the payload information directly to gateway 780 using the roaming number obtained from HLR 760. This results in improved speech quality and eliminates speech delays encountered at the converting devices. Moreover, by maintaining the call in the IP domain, speech path optimization is achieved for the payload, which in turn provides the ITSP with the opportunity to control the routing and minimize the router hops on its IP backbone network.

According to another exemplary embodiment of the present invention, additional transcoding steps (possibly all transcoding) can be avoided if the communication nodes can agree on a single encoding, that is if so-called "tandem free operation" (TFO) can be made to work end-to-end for IP-telephony. In the general case, this would imply voice gateways being able to extend TFO negotiation on the circuit switched call legs towards the IP call legs and vice versa.

By combining inband signalling (e.g., as set forth in GSM TS 04.53) through the telephony exchanges and outband signalling in the IP network (e.g., as set forth in H.245, SDP, RTCP), it is possible to achieve one encoding and one decoding of the speech, end-to-end, when a mobile subscriber is involved. Alternatively, this method can be used on parts of the call to minimize the number of transcodings. By negotiating a suitable format of encoded speech between the nodes involved in the routing, the bandwidth used in the IP network can be minimised.

More specifically, additional transcoding can be reduced by applying the GSM codec and the emerging GSM Tandem Free Operation standard between every GSM BSC and every VoIP gateway, thus avoiding the present transcoding in the BSCs. In the case that the VoIP gateways involved in the call are under the control of the same service provider, they can be configured to use the GSM codec over the IP legs resulting in end-to-end transcoding for a mobile-to-mobile VoIP call.

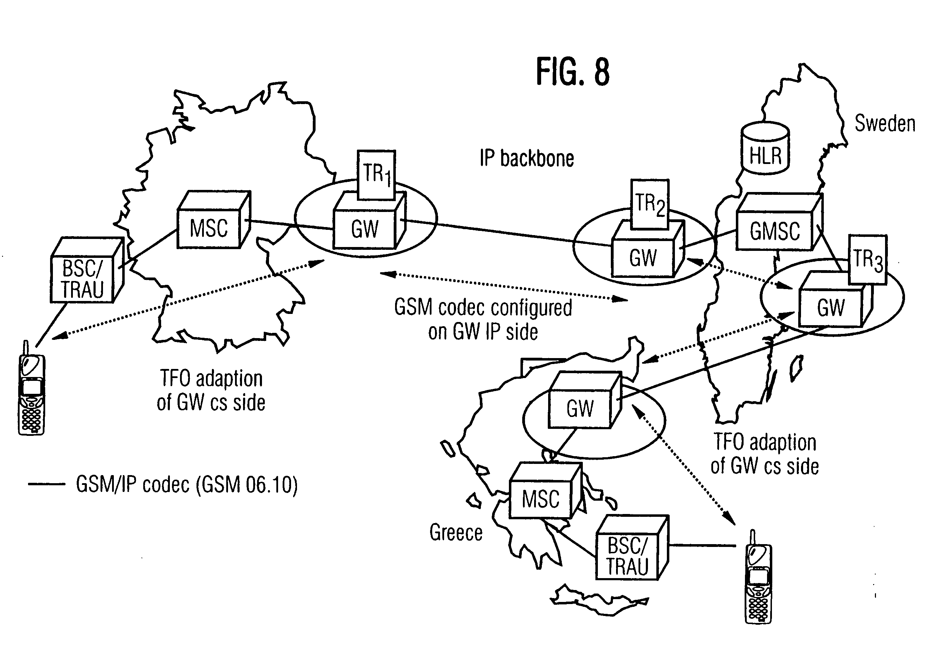

In the general case where the VoIP GWs belong to different service providers, end-to-end transcoding can be achieved by deploying a logic that maps the inband TFO codec negotiation on the circuit switched leg with an outband H.245/SDP codec negotiation clone over the IP leg. This can be done immediately after the call set-up resulting in a codec re-negotiation between the end-points participating in the call. Also if, during the call, poor radio conditions are encountered then if an adaptive, multi-rate codec is available on the mobile station, a dynamic adaptation to a lower, codec bit-rate can be agreed end-to-end. These concepts are illustrated in Figure 8.

According to this exemplary embodiment of the present invention, better speech quality in a call involving mobile subscriber(s) is available when the call traverses both a telephony exchange and an IP network. At the same time the bandwidth used in the IP network is minimized.

Although the invention has been described in detail with reference only to a few exemplary embodiments, those skilled in the art will appreciate that various modifications can be made without departing from the invention. Accordingly, the invention is defined only by the following claims which are intended to embrace all equivalents thereof.

## Claims

1. A method for controlling an originating network performing the following steps for setting up a call between an originating station (690) located at the originating network and a terminating station (695) located in a visited network for mobile communication, the networks being connected by an IP network:
- determining the home network of the terminating station,
- requesting a connection (710) via the IP network to the home network of the terminating station,
- receiving a roaming number of the terminating station,
- requesting the termination of the connection between the originating network and the home network,
- determining an IP address of a gateway (780) connected to the visited network,
- requesting the set up of a connection (700) between a gateway (770) connected to the originating network and the gateway (780) connected to the visited network for the call.

2. A method according to claim 1, wherein the connection between the gateway connected to the originating network and the gateway connected to the visited network is a circuit switched connection.

3. A method according to claim 1, wherein the connection between the gateway connected to the originating network and the gateway connected to the visited network is an IP connection.

4. A method according to claim 1, 2, or 3 with the additional steps of
- obtaining a user's profile from the home location register, evaluating the user's profile, and
- determining a carrier type from the user's profile for the connection between the gateways connected to the originating and terminating networks.

5. A method according to any of the preceding claims, with the additional step of minimising the number of router hops in the IP network.

6. A method according to any of the preceding claims, with the additional step of negotiating an end-to-end coding of speech between the originating and the terminating station.

7. A method according to claim 6, wherein the originating network is a network for mobile telecommunication and the end-to-end coding is a tandem free operation coding.

8. A method according to claim 6 or 7, wherein the signalling for the negotiation is in-band signalling within networks for mobile telecommunication and out-band signalling in the IP network.

9. An apparatus adapted to perform the method of any of the claims 1 to 8.

## Patentansprüche

1. Verfahren zum Steuern eines Ursprungsnetzes, das die folgenden Schritte zum Aufbauen eines Anrufs zwischen einer Ursprungsstation (690), die am Ursprungsnetz angeordnet ist, und einer Zielstation (695), die in einem besuchten Netz für Mobilkommunikation angeordnet ist, durchführt, wobei die Netze durch ein IP-Netz verbunden sind:
- Bestimmen des Heimatnetzes der Zielstation,
- Anfordern einer Verbindung (710) zu dem Heimatnetz der Zielstation über das IP-Netz,
- Empfangen einer Roaming-Nummer der Zielstation,
- Anfordern des Abschlusses der Verbindung zwischen dem Ursprungsnetz und dem Heimatnetz,
- Bestimmen einer IP-Adresse eines Gateways (780), das mit dem besuchten Netz verbunden ist,
- Anfordern des Aufbaus einer Verbindung (700) zwischen einem Gateway (770), das mit dem Ursprungsnetz verbunden ist, und dem Gateway (780), das mit dem besuchten Netz verbunden ist, für den Anruf.

2. Verfahren nach Anspruch 1, wobei die Verbindung zwischen dem Gateway, das mit dem Ursprungsnetz verbunden ist, und dem Gateway, das mit dem besuchten Netz verbunden ist, eine leitungsvermittelte Verbindung ist.

3. Verfahren nach Anspruch 1, wobei die Verbindung zwischen dem Gateway, das mit dem Ursprungsnetz verbunden ist, und dem Gateway, das mit dem besuchten Netz verbunden ist, eine IP-Verbindung ist.

4. Verfahren nach Anspruch 1, 2 oder 3 mit den zusätzlichen Schritten:
- Beziehen eines Profils eines Benutzers von der Heimatdatei,
- Auswerten des Profils des Benutzers und
- Bestimmen eines Trägertyps aus dem Profil des Benutzers für die Verbindung zwischen den Gateways, die mit dem Ursprungsnetz und dem Zielnetz verbunden sind.

5. Verfahren nach einem der vorhergehenden Ansprüche mit dem zusätzlichen Schritt des Verringerns der Anzahl von Router-Hops in dem IP-Netz.

6. Verfahren nach einem der vorhergehenden Ansprüche mit dem zusätzlichen Schritt des Verhandelns einer Kodierung von Sprache von Ende zu Ende zwischen der Ursprungsstation und der Zielstation.

7. Verfahren nach Anspruch 6, wobei das Ursprungsnetz ein Netz zur Mobiltelekommunikation ist und die Kodierung von Ende zu Ende eine Kodierung der Art ist, die nicht nacheinander vorgenommen wird.

8. Verfahren nach Anspruch 6 oder 7, wobei die Signalisierung für die Verhandlung in Netzen zur Mobiltelekommunikation Inbandsignalisierung und in dem IP-Netz Outbandsignalisierung ist.

9. Vorrichtung, die zum Durchführen des Verfahrens nach einem der Ansprüche 1 bis 8 eingerichtet ist.

## Revendications

1. Procédé pour commander un réseau d'origine effectuant les étapes suivantes pour établir un appel entre une station d'origine (690) située au niveau du réseau d'origine et une station de destination (695) située dans un réseau de communication mobile visité, les réseaux étant connectés par un réseau IP :
- déterminer le réseau de rattachement de la station de destination,
- demander une connexion (710) via le réseau IP au réseau de rattachement de la station de destination,
- recevoir un numéro itinérant de la station de destination,
- demander la terminaison de la connexion entre le réseau d'origine et le réseau de rattachement,
- déterminer une adresse IP d'une passerelle (780) connectée au réseau visité,
- demander l'établissement d'une connexion (700) entre une passerelle (770) connectée au réseau d'origine et la passerelle (780) connectée au réseau visité en vue de l'appel.

2. Procédé selon la revendication 1, dans lequel la connexion entre la passerelle connectée au réseau d'origine et la passerelle connectée au réseau visité est une connexion à commutation de circuits.

3. Procédé selon la revendication 1, dans lequel la connexion entre la passerelle connectée au réseau d'origine et la passerelle connectée au réseau visité est une connexion IP.

4. Procédé selon la revendication 1, 2 ou 3 comportant les étapes additionnelles consistant à :
- obtenir un profil d'utilisateur provenant du registre de localisation d'origine,
- évaluer le profil d'utilisateur, et
- déterminer un type de porteuse à partir du profil d'utilisateur pour la connexion entre les passerelles connectées aux réseaux d'origine et de destination.

5. Procédé selon une quelconque des revendications précédentes, comportant l'étape additionnelle consistant à minimiser le nombre de sauts de routeur dans le réseau IP.

6. Procédé selon une quelconque des revendications précédentes, comportant l'étape additionnelle consistant à négocier un codage de bout en bout de la parole entre la station d'origine et la station de destination.

7. Procédé selon la revendication 6, dans lequel le réseau d'origine est un réseau de télécommunication mobile et le codage de bout en bout est un codage en exploitation tandem free.

8. Procédé selon la revendication 6 ou 7, dans lequel la signalisation pour la négociation est une signalisation dans la gamme à l'intérieur des réseaux de télécommunication mobile et une signalisation hors-gamme dans le réseau IP.

9. Appareil adapté afin de mettre en oeuvre le procédé d'une quelconque des revendications 1 à 8.
